# EUROPEAN PATENT SPECIFICATION

(11) **EP 2 998 138 B1**
(45) Date of publication and mention of the grant of the patent: **12.02.2020**
(21) Application number: 15184097.2
(22) Date of filing: 07.09.2015
(51) Int. Cl.: B60H 1/32

(54) **A VEHICLE COMPRISING SEVERAL REFRIGERATED LOAD COMPARTMENTS**
FAHRZEUG MIT MEHREREN GEKÜHLTEN LADERÄUMEN
VÉHICULE COMPORTANT PLUSIEURS COMPARTIMENTS DE CHARGE RÉFRIGÉRÉS

(30) Priority: 15.09.2014 NL 2013468
(43) Date of publication of application: 23.03.2016
(73) Proprietor: Carrier Corporation, Jupiter, FL 33458 (US)
(72) Inventor: Kooi, Eeuwe Durk, 2202 AP Noordwijk (NL)
(74) Representative: Vernout, Robert

(56) References cited:
- EP-A1- 1 022 171
- EP-A2- 0 327 388
- NL-C2- 1 009 363
- US-A- 3 984 224

## Description

The invention relates to a vehicle having at least three load compartments, which comprises a refrigeration system for refrigerating or freezing said load compartments by operating a vapour compression cycle. The load compartments are separated from each other by a partitioning wall, so that each load compartment can be refrigerated to its own individual temperature. Such a vehicle is disclosed in EP-A-0327388. It is noted that the term "vehicle" as used within the framework of the present invention is to be understood to include vessels and aircraft, whilst the term "refrigerating" is to be understood to mean freezing as well. The invention also relate to the refrigeration system as such.

A vehicle with such refrigeration system is generally known. The operating principle of a vapour compression cycle is as follows: the pressure and the temperature of the vapour of the refrigerant is increased by the compressor before the refrigerant enters the condenser, where it is cooled and condensed and gives up heat to the atmosphere outside the space to be refrigerated. The high pressure of the fluid is then throttled to evaporator pressure and temperature by means of an expansion valve. Inside the evaporator, the fluid expands and evaporates while absorbing heat from the space to be refrigerated. The vapour at the outlet of the evaporator is supplied to the compressor, thus completing the cycle.

Frequently, three different temperatures must be maintained in the three load compartments of a vehicle as referred to in the introduction, for example 0 °C and 6 °C (cooling) and -18 °C (freezing). It is desirable that each compartment can be set to freeze or to cool as necessary, and to do so at a desired temperature. The evaporation pressure for cooling is however very different than for freezing. Therefore preferably different circuits are used. The goal of the invention is to provide a cost effective, energy efficient and/or reliabl refrigeration system for this situation.

To that end a vehicle in accordance with claim 1 is provided. The refrigeration system comprises at least two separate closed circuits for refrigerant, wherein each circuit includes a separate evaporator, a separate compressor and a separate condenser, and wherein said evaporators are each disposed in a respective first and second load compartment, and wherein at least one third evaporator is disposed in the third load compartment, and wherein said two closed circuits include said at least one third evaporator. Thereby a third circuit is not necessary, and furthermore the cooling of the third compartment can be done more efficiently.

Preferably valves are provided in said two circuits to regulate the flow of refrigerant to each one of said evaporators. Preferably the system includes control means arranged to close and open said valves in dependence of refrigerating process parameters in each of said three compartments. Preferably said process parameters include the actual temperature in each of said compartments. Preferably said process parameters include the set temperature in each of said compartments. Preferably the system includes control means for closing and opening said valves in dependence of refrigerating process parameters in each of said two circuits. Preferably said process parameters include the evaporation pressure in each of said circuits. Preferably one third evaporator is included in both said two closed circuits.

A drawback of known refrigeration systems is that the refrigerant absorbs more oil in the freezing compartment than in the cooling compartment, so that more oil is present in the "freezing" evaporator than in the "cooling" evaporator. As long as the system is in operation, the total amount of oil that is present is geared thereto and no problems will occur. As soon as the freezing space has reached the adjusted temperature, however, the evaporator present therein will be turned off, whilst the other evaporator may still be in operation. As a result, the oil from the "freezing" evaporator will not flow back to the compressor to perform its lubricating function. When the total amount of oil is low, this may cause the compressor to seize.

A solution to this problem is to add extra oil to the system. One drawback of this solution, however, is the fact that there is a risk that the compressor will start to compress oil rather than gas, a phenomenon which is also called "slugging".

Another drawback of the known refrigeration systems is that the humidity of the air inside the load compartments will rise to a relatively high level due to frequent opening of the loading door and/or to the introduction of warm, moist loads, causing the evaporators to ice up quickly. The ice must be removed periodically, which can be done by using electrical defrosting means or as a rule by reversing the mass flow in the evaporator in question, as a result of which the evaporator is heated temporarily. It must be possible for the other evaporator to continue to operate during said defrosting, of course. The removal of ice from the evaporators independently of each other by means of the latter method is a complex matter, therefore, which requires quite a few additional measures in the form of bypasses and control equipment.

It is desired that the system responds in a stable manner to large temperature differences and temperature fluctuations in the load compartments to be refrigerated and to icing up of the evaporators, without this having adverse effects on the overall condition and operation of the refrigeration system.

Preferably, the load compartments extend substantially in the longitudinal direction of the vehicle, so that loading and unloading of the load compartments can take place in a simple manner from the rear side of the vehicle.

In another embodiment the partitioning wall can be removed.

Preferably, at least two system components comprising the motor, the compressors, the condensers and the evaporators are accommodated in a common housing. This enables a compact, cost-efficient production and installation of the refrigeration system.

Preferably, the control means are arranged to regulate the mass flow of refrigerant to the respective evaporators in dependence on the measured refrigeration process parameter. This makes it possible to adapt the capacity of the plant as a whole as well as that of the individual evaporators to the prevailing conditions, thereby ensuring a continuous operation of the plant.

In one embodiment the measuring means comprise a clock, wherein the measured refrigeration process parameter comprises the time during which the refrigeration system is in operation, or the measuring means comprise ice detection means which are capable of detecting the presence of ice on the individual evaporators, and wherein the measured refrigeration process parameter comprises the detected icing up. The evaporators are preferably fitted with defrosting means, preferably electric defrosting means, which are controlled by said ice detection means and/or by said clock.

Preferably, the control means are capable of reversing the mass flow in one of the closed circuits periodically or in dependence on the detected presence of ice so as to remove the ice from the evaporator.

The invention will now be explained in more detail with reference to figures illustrated in a drawing, wherein:
- Figure 1 is a schematic diagram showing the physical principle of the present refrigeration system;
- Figure 2 is a schematic representation of a refrigeration system according to the prior art;
- Figure 3 is a schematic representation of another refrigeration system according to the prior art;
- Figure 4 is a schematic representation of a preferred embodiment of a refrigeration system according to the invention; and
- Figures 5A, 5B and 5C cross sectional views of an evaporator block of the system of figure 4.

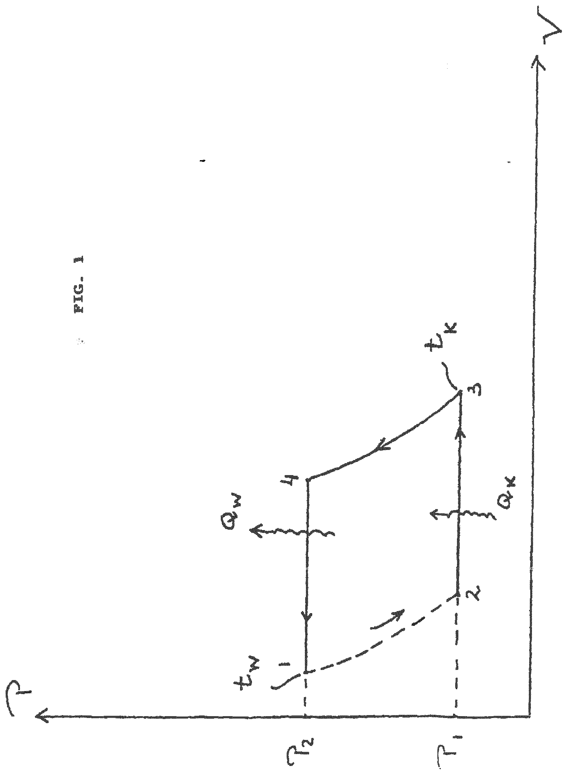

The schematic diagram of Figure 1 shows the path of a constant mass of refrigerant as being transported, at a temperature and a pressure associated with the condenser, through the expansion valve, through the evaporator, to the compressor and finally back to the condenser. Starting from point 1 in the diagram, which corresponds to the condition of the saturated fluid at the temperature and the pressure of the condenser, the refrigeration system comprises the following processes:
1 - 2: A throttling process comprising a pressure and temperature drop. The conditions between the original and the final condition of the fluid during a throttling process cannot be described by means of thermodynamic coordinates relating to the refrigeration system as a whole, and consequently they cannot be represented at points in the PV-diagram. All this is now illustrated in a dotted line between 1 and 2.
2 - 3: Isothermal, isobaric evaporation, wherein heat Qₖ is absorbed by the refrigerant at a low temperature Tₖ, thus refrigerating the loading space.
3 - 4: Adiabatic compression of the vapour to a temperature higher than that of the condenser T_{w}.
4 - 1: Isobaric refrigeration and condensation at a temperature T_{w}.

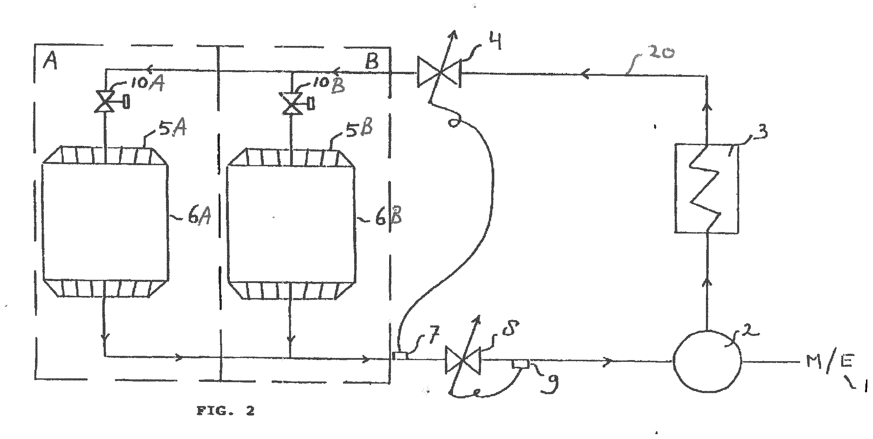

Figure 2 shows a compact refrigeration system according to the prior art for cooling (at approximately 0 °C) or freezing (at approximately -20 °C) of load compartments A and B of a truck. The refrigeration system comprises a circuit 20 filled with a refrigerant liquid, a compressor 2 driven by the engine of the truck, by a separate diesel engine or by an electric driving unit 1, a condenser 3, an expansion valve 4, two distributors 5A, 5B and two evaporators 6A, 6B in the respective compartments. Furthermore a temperature sensor 7 connected to the expansion valve is provided, as well as a starting regulator 8 connected to a pressure sensor 9.

The pressure and the temperature of the gaseous refrigerant are increased by compressor 2, after which the refrigerant enters the condenser 3, where it condenses and gives up heat to the atmosphere outside the load compartments to be refrigerated. The fluid under high pressure is then throttled to the desired evaporation pressure and temperature by the expansion valve 4, depending on the temperature conditions (measured by the temperature sensor 7) upon exiting evaporators 6. The mass flow to the two evaporators 6A, 6B is controlled by means of valves 10A, 10B, which are connected to thermostats in the respective load compartments. When the mass flow to the two evaporators 6A, 6B is shut off, the motor 1 will be turned off. The refrigerant enters the evaporators 6A, 6B via distributors 5A, 5B and expands and evaporates there, whereby it absorbs heat from the surrounding atmosphere in the load compartment to be refrigerated. The refrigerant, which is gaseous now, is led back to the compressor via starting regulator 8, thus completing the circuit.

Starting regulator 8 functions to regulate the refrigerating capacity when the refrigeration system is being overloaded, for example when new, relatively hot loads are introduced into the compartment, or when the doors of the load compartment remain open for a prolonged period of time. This manifests itself in an excessive pressure at the inlet of compressor 2, as a result of which the capacity required of the compressor 2 will be too high. The excessive pressure is registered by the pressure sensor 9, which drives the starting regulator 8 to throttle the through-flow of refrigerating gas. A simpler alternative, which is also used frequently, is to use a restriction which does not allow more gas to pass than a preset (maximum) amount.

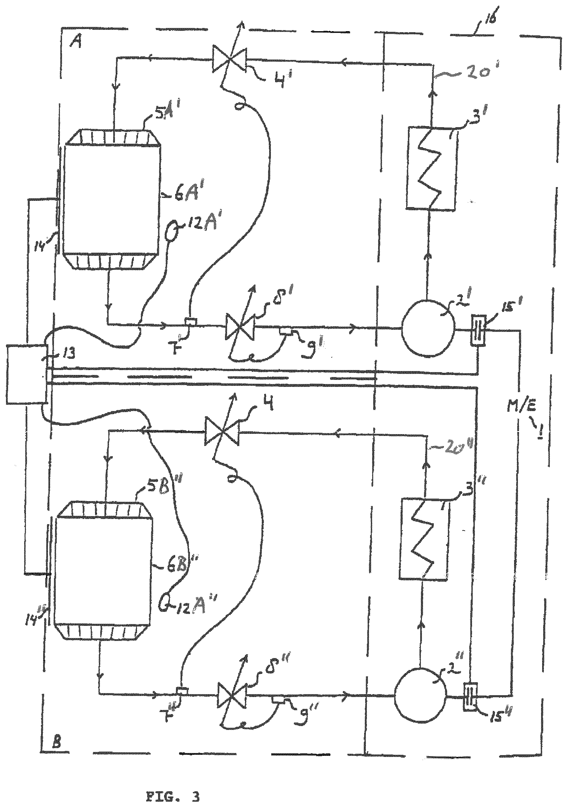

Referring to Figure 3, two separate circuits 20', 20" are used, one for each of the load compartments A and B, each comprising a compressor 2', 2", a condenser 3', 3" and an evaporator 6A', 6B". In the preferred embodiment, both circuits 20', 20" are driven by one common motor 1, for example the engine of the vehicle itself, but it is also possible for each circuit 20', 20" to have its own motor 1. The evaporators 6A', 6B" in the respective load compartments A and B are fitted with ice detection means 12A', 12B", which are connected to a control unit 13. Ice detection means may be in the form of pressure difference gauges, which measure the pressure difference between the air intake and the air exhaust of the air flow past the evaporator. The icing impedes the air flow past the evaporator, which is generated by means of a fan, so that a measurable difference in air pressure is created. Instead of using ice detection means, it is also possible to use a time switch, which activates the defrosting process at predetermined points in time. When the presence of ice on one of the evaporators 6A', 6B" is detected, or when the predetermined period of time has elapsed, control unit 13 can activate electrical defrosting means 6 associated with the evaporator 6A', 6B" in question. At the same time, or independently thereof, the control unit 13 can disconnect the compressor 2', 2" associated with the evaporator in question from motor 1 by means of electromagnetic connecting means 15', 15", or even reverse the direction of the mass flow by means of a valve assembly (not shown) in order to effect speedy defrosting of the evaporator 6A', 6B" in question, whilst the other refrigerating circuit remains in operation. Connecting means 15', 15" are also controlled by thermostats in the respective load compartments A and B, which will cut off the circuit in question when the desired temperature is reached.

In the preferred embodiment, motor 1, compressors 2', 2" and condensers 3', 3" are jointly placed in one housing 16.

It is noted that when the partitioning wall between the two compartments A and B is removed, both evaporators 6A', 6B" will be available for refrigerating the one compartment thus formed. The advantage of this is that a better control of the capacity of the refrigeration system is made possible not only by throttling the mass flow, but also by the selective activation of both circuits 20', 20". In practice the controlling of the capacity merely by throttling has appeared to be highly problematic in the strongly varying conditions of a transport load compartment. The additional possibility of connecting or disconnecting an additional refrigerating circuit has major advantages in that case.

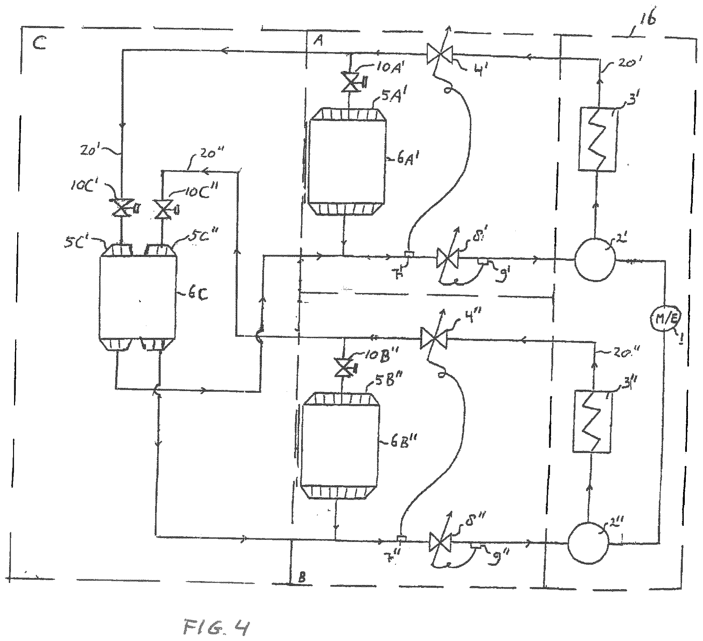

Referring to Figure 4 a compact refrigeration system according to the invention is shown for cooling of instance vegetables or meat (for instance at approximately 0 °C to 6 °C) and/or for freezing products (for instance at approximately -20 °C) in three load compartments A, B and C of a truck. A third compartment C is added to the system of figure 3, and said compartment is cooled by a dual evaporator 6C. Two separate circuits 20', 20" are used, one for each of the load compartments A and B, each comprising a compressor 2', 2", a condenser 3', 3". In the preferred embodiment, both circuits 20', 20" are driven by one common motor 1, for example the engine of the vehicle itself, but it is also possible for each circuit to have its own motor 1. According to the invention the system is arranged so that both circuits may be used to cool of freeze the third compartment C through the dual evaporator 6C. To that end the first circuit 20' is connected to the evaporator 6C by distributor 5C', and the second circuit 20" is connected to the evaporator 6C by distributor 5C". Alternatively two evaporators may be used, one connected to the first circuit 20', and one connected to the second circuit 20".

The mass flow to each of the evaporators 6A', 6B", 6C is controlled by means of valves 10A', 10B", 10C', 10C", which are connected to a control unit, which is connected to thermostats in the respective load compartments and which can determine the evaporation pressure in the respective circuits 20', 20". Each compartment can be refrigerated or frozen to a temperature of choice. Since the evaporation pressures for temperatures in the freezing range and for temperatures in the cooling range are very different, but within the freezing range respectively the cooling range are close to each other, the control unit is programmed to control the valves 10A', 10 B", 10C', 10 C" such that depending on the set temperatures and the actual temperatures in the three compartments and the evaporation pressures in each of the circuits 20', 20", either circuit 20' or circuit 20", or both circuits 20', 20" at the same time, are used to cool or freeze the third compartment C.

For instance, depending on the set temperature in the third compartment C, the control unit will open the valve 10C' or 10" of the circuit 20', 20" which has the evaporation pressure closest to the desired evaporation pressure belonging to that set temperature. If the temperature in one of the other compartments A, B has reached the set temperature for that compartment and the control unit 13 has switched the respective valve 10A', 10B' through the respective compartment A, B off therefore, the control unit 13 will switch the respective valve 10C', 10C" in the respective circuit 20', 20" on, so that the cooling or freezing of the third compartment C will be accelerated.

In this manner the system works in a very energy efficient, cost efficient and fast manner.

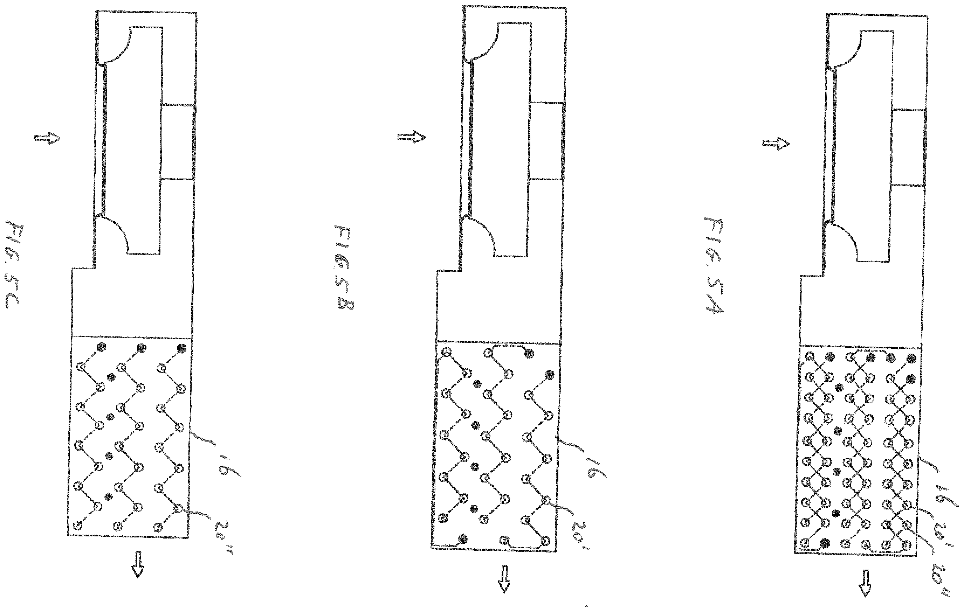

As shown in Figures 5A, 5B, 5C a dual evaporator 6C is shown The arrows indicate the flow of air to be cooled through the evaporator. In the dual evaporator 6C the two circuits 20', 20" run in meandering copper pipe segments through the same evaporator block 16 in an alternating manner, such that the pipe segments of both circuits are evenly spread in the block. If the evaporator block 16 of dual evaporator 6C has the same size as the evaporator block of evaporators 6A', 6B", and the number of segments of the two circuits 20', 20" extending in the dual evaporator 6C is each half of the number of segments extending in the respective circuit 20', 20" in respective evaporator 6A', 6B", it has been shown that if only one of the circuits 20', 20" is used, the evaporators capacity is 75% of the full capacity, where one would expect 50% of the full capacity. This is caused by the fact that the heat is transferred to still the same amount of evaporator block material, in particular to the (usually aluminum) lamellas or ribs thereof.

## Claims

1. A vehicle (16) having at least three load compartments (A, B, C), which comprises a refrigeration system for refrigerating or freezing said load compartments by operating a vapour compression cycle, which compartments are separated from each other by a partitioning wall, so that each load compartment (A, B, C) can be refrigerated to its own individual temperature, **characterized in that** the refrigeration system comprises at least two separate closed circuits (20', 20") for refrigerant, wherein a first one of said circuits (20') includes a first evaporator (6A'), a first compressor (2',) and a first condenser (3'), and wherein said first evaporator (6A') is disposed in the first load compartment (A), and wherein a separate second one of said circuits (20") includes a separate second evaporator (6B"), a separate second compressor (2") and a separate second condenser (3"), and wherein said separate second evaporator (6B") is disposed in the second load compartment (B), and wherein at least one separate third evaporator (6C) is disposed in the third load compartment (C), and wherein said two closed circuits (20', 20") include said at least one third evaporator (6C).

2. A vehicle (16) according to claim 1, wherein valves are provided in said two circuits to regulate the flow of refrigerant to each one of said evaporators (6A', 6B", 6C).

3. A vehicle (16) according claim 2, wherein the system includes control means arranged to close and open said valves in dependence of refrigerating process parameters in each of said three compartments (A, B, C).

4. A vehicle (16) according to claim 3, wherein said process parameters include the actual temperature in each of said compartments (A, B, C).

5. A vehicle (16) according to claim 3 or 4, wherein said process parameters include the set temperature in each of said compartments (A, B, C).

6. A vehicle (16) according to any one of the preceding claims 2 - 5, wherein the system includes control means for closing and opening said valves in dependence of refrigerating process parameters in each of said two circuits (20', 20").

7. A vehicle (16) according to claim 5, wherein said process parameters include the evaporation pressure in each of said circuits (20', 20").

8. A vehicle (16) according to any one of the preceding claims, wherein one third evaporator (6C) is included in both said two closed circuits (20', 20").

## Patentansprüche

1. Fahrzeug (16) mit wenigstens drei Lagerräumen (A, B, C), das ein Kühlsystem zum Kühlen oder Gefrieren der Laderäume durch Betreiben eines Dampfkompressionszyklus aufweist, wobei die Laderäume voneinander durch eine Trennwand getrennt sind, sodass jeder Laderaum (A, B, C) auf eine eigene individuelle Temperatur gekühlt werden kann, **dadurch gekennzeichnet, dass** das Kühlsystem wenigstens zwei geschlossene Kreisläufe (20', 20") für Kühlmittel aufweist, wobei ein erster der Kreisläufe (20') einen ersten Verdampfer (6A'), einen ersten Kompressor (2') und einen ersten Kondensierer (3') aufweist, und wobei der erste Verdampfer (6A') im ersten Laderaum (A) angeordnet ist, und wobei ein getrennter zweiter einzelner von den Kreisläufen (20") einen getrennten zweiten Verdampfer (6B"), einen getrennten zweiten Kompressor (2") und einen getrennten zweiten Kondensierer (3") aufweist, und wobei der getrennte zweite Verdampfer (6B") im zweiten Laderaum (B) angeordnet ist, und wobei wenigstens ein dritter Verdampfer (6C) im dritten Laderaum (C) angeordnet ist, und wobei die beiden geschlossenen Kreisläufe (20', 20") den wenigstens einen dritten Verdampfer (6C) aufweisen.

2. Fahrzeug (16) nach Anspruch 1, wobei Ventile in den beiden Kreisläufen vorgesehen ist, um den Fluss des Kühlmittels zu einem jeden von den Verdampfern (6A', 6B", 6C) zu regeln.

3. Fahrzeug (16) nach Anspruch 2, wobei das System Steuermittel aufweist, die angeordnet sind um die Ventile in Abhängigkeit von Kühlprozessparametern in einem jeden der drei Räume (A, B, C) zu schließen und zu öffnen.

4. Fahrzeug (16) nach Anspruch 3, wobei die Prozessparameter die tatsächliche Temperatur in jedem der Räume (A, B, C) aufweisen.

5. Fahrzeug (16) nach Anspruch 3 oder 4, wobei die Prozessparameter die eingestellte Temperatur in jedem der Räume (A, B, C) aufweisen.

6. Fahrzeug (16) nach einem der vorhergehenden Ansprüche 2 bis 5, wobei das System Steuermittel aufweist, um die Ventile in Abhängigkeit von Prozessparametern in einem jeden der zwei Kreisläufe (20', 20") zu schließen und zu öffnen.

7. Fahrzeug (16) nach Anspruch 5, wobei die Prozessparameter den Verdampfungsdruck in einem jeden der Kreisläufe (20', 20") aufweisen.

8. Fahrzeug (16) nach einem der vorhergehenden Ansprüche, wobei der dritte Verdampfer (6C) in den beiden zwei geschlossenen Kreisläufen (20', 20") enthalten ist.

## Revendications

1. Véhicule (16) ayant au moins trois compartiments de charge (A, B, C), qui comprend un système de réfrigération pour réfrigérer ou congeler lesdits compartiments de charge en actionnant un cycle de compression de vapeur, lesquels compartiments sont séparés les uns des autres par une cloison de séparation, de sorte que chaque compartiment de charge (A, B, C) peut être réfrigéré à sa propre température individuelle, **caractérisé en ce que** le système de réfrigération comprend au moins deux circuits (20', 20") fermés séparés pour le fluide frigorigène, dans lequel un premier desdits circuits (20') comporte un premier évaporateur (6A'), un premier compresseur (2'), et un premier condenseur (3'), et dans lequel ledit premier évaporateur (6A') est disposé dans le premier compartiment de charge (A), et dans lequel un second circuit (20") séparé desdits circuits comporte un deuxième évaporateur (6B") séparé, un second compresseur (2") séparé et un second condenseur (3") séparé, et dans lequel ledit deuxième évaporateur (6B") séparé est disposé dans le deuxième compartiment de charge (B), et dans lequel au moins un troisième évaporateur (6C) séparé est disposé dans le troisième compartiment de charge (C), et dans lequel lesdits deux circuits (20', 20") fermés comportent ledit au moins un troisième évaporateur (6C).

2. Véhicule (16) selon la revendication 1, dans lequel des soupapes sont prévues dans lesdits deux circuits pour réguler la circulation de fluide frigorigène vers chacun desdits évaporateurs (6A', 6B", 6C).

3. Véhicule (16) selon la revendication 2, dans lequel le système comporte des moyens de commande agencés pour fermer et ouvrir lesdites soupapes en fonction de paramètres de processus de réfrigération dans chacun desdits trois compartiments (A, B, C).

4. Véhicule (16) selon la revendication 3, dans lequel lesdits paramètres de processus comportent la température réelle dans chacun desdits compartiments (A, B, C).

5. Véhicule (16) selon la revendication 3 ou 4, dans lequel lesdits paramètres de processus comportent la température de consigne dans chacun desdits compartiments (A, B, C).

6. Véhicule (16) selon l'une quelconque des revendications 2 à 5 précédentes, dans lequel le système comporte des moyens de commande pour ouvrir et fermer lesdites soupapes en fonction de paramètres de processus de réfrigération dans chacun desdits deux circuits (20', 20").

7. Véhicule (16) selon la revendication 5, dans lequel lesdits paramètres de processus comportent la pression d'évaporation dans chacun desdits circuits (20', 20").

8. Véhicule (16) selon l'une quelconque des revendications précédentes, dans lequel un troisième évaporateur (6C) est inclus dans lesdits deux circuits (20', 20") fermés.
